# EUROPÄISCHE PATENTANMELDUNG

(11) **EP 2 192 323 A2**
(43) Veröffentlichungstag der Anmeldung: **02.06.2010**
(21) Anmeldenummer: 09176459.7
(22) Anmeldetag: 19.11.2009
(51) Int. Cl.: F16F 9/32

(54) **Schwingungsdämpfer mit hubabhängiger Dämpfkraft**

(30) Priorität: 26.11.2008 DE 102008044081
(71) Anmelder: ZF Friedrichshafen AG, 88038 Friedrichshafen (DE)
(72) Erfinder: Rottenberger, Theo, 97705, Burkardroth (DE); Kirchner, Rainer, 97490, Poppenhausen (DE); Barnickel, Rainer, 96352, Wilhelmsthal (DE)

(57) **Zusammenfassung**

Schwingungsdämpfer (1), umfassend einen Zylinder (3), in dem ein Verdränger (5) eine translatorische Betriebsbewegung ausführt, wobei der Verdränger (5) einen Arbeitskolben (7) umfasst, der den Zylinder (3) in zwei Arbeitsräume (9,11) unterteilt, wobei die Arbeitsräume (9,11) außerhalb des Verdrängers (5) für jede Betriebsbewegungsrichtung des Verdrängers (5) durch eine Strömungsverbindung mit Dämpfventilen (19) verbunden sind, wobei jede Strömungsverbindung durch eine Rückschlagventilanordnung nur eine Strömungsrichtung aufweist, wobei die Strömungsverbindung ausgehend vom den Arbeitsräumen (9,11) mehrere in axialer Richtung versetzt liegende Einströmöffnungen (21) aufweist und von einem Bypasskanal (27,29) gebildet wird und an den Bypasskanal mehrere Dämpfventile (19) angeschlossen sind, die über die Einströmöffnungen (27,29) beaufschlagt werden.

## Beschreibung

Die Erfindung betrifft einen Schwingungsdämpfer gemäß dem Oberbegriff von Patentanspruch 1.

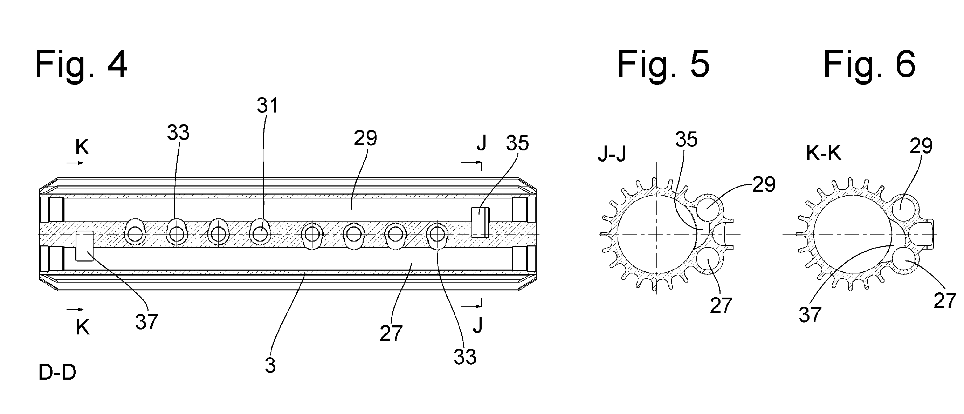

Aus der US 7,191, 877 B2 ist ein Schwingungsdämpfer mit hubabhängiger Dämpfkraft bekannt, umfassend einen Zylinder, in dem ein Verdränger eine translatorische Betriebsbewegung ausführt. Der Verdränger weist einen Arbeitskolben auf, der den Zylinder in zwei Arbeitsräume unterteilt, wobei die Arbeitsräume außerhalb des Verdrängers für jede Betriebsbewegungsrichtung des Verdrängers durch eine Strömungsverbindung mit Dämpfventilen verbunden sind, wobei jede Strömungsverbindung durch eine Rückschlagventilanordnung nur eine Strömungsrichtung aufweist. Die Strömungsverbindung weist ausgehend vom den Arbeitsräumen mehrere in axialer Richtung versetzt liegende Einströmöffnungen auf. Mehrere Bypasskanäle bilden jeweils die Strömungsverbindung für eine Betriebsbewegung des Verdrängers. In jedem Bypasskanal ist ein einziges Dämpfventil angeordnet. Das beschriebene Beispiel nach Fig. 5 umfasst vier Bypasskanäle, so dass pro Bewegungsrichtung zwei Dämpfventile einsetzbar sind und damit pro Bewegungsrichtung maximal drei hubabhängige Dämpfkraftkennlinien zur Verfügung stehen.

Wenn man weitere Dämpfkraftkennlinien, also eine feiner abgestufte hubabhängige Dämpfkraftverstellung, erreichen will muss man jeweils einen weiteren Bypasskanal vorsehen. Aus den Fig. 5 und 6 der US 7,191, 877 B2 ist erkennbar, dass der zur Verfügung stehende Bauraum an der äußeren Mantelfläche des Zylinders nicht zur Verfügung steht. Des Weiteren wird der Flächenanteil für Kühlrippen herabgesetzt.

Die Aufgabe der vorliegenden Erfindung besteht darin, den aus dem Stand der Technik beschrieben Bauraumnachteil zu beheben.

Erfindungsgemäß wird die Aufgabe dadurch gelöst, dass die Strömungsverbindung von einem Bypasskanal gebildet wird und an den Bypasskanal mehrere Dämpfventile angeschlossen sind, die über die Einströmöffnungen beaufschlagt werden.

Durch die Bündelung mehrere Dämpfventile an einen Bypasskanal kann das Bauraumproblem behoben werden.

In weiterer vorteilhafter Ausgestaltung liegt pro Bewegungsrichtung des Verdrängers ein einziger Bypasskanal vorliegt. Damit ist der Bauraumbedarf in Umfangsrichtung zum Zylinder unabhängig von der Anzahl der verwendeten Dämpfventile.

Im Hinblick auf eine einfache Fertigung des Schwingungsdämpfers sind mehrere Dämpfventile in einem gemeinsamen Gehäuse angeordnet, wobei das Gehäuse in Fluidverbindung mit dem Bypasskanal steht.

In der Fluidverbindung ist für jedes Dämpfventil in Strömungsrichtung zum Dämpfventil ein sich schließendes Rückschlagventil angeordnet. Ein Kurzschluss der Strömungswege im Schwingungsdämpfer ist damit ausgeschlossen.

Aus Bauraumgründen und zur Vereinfachung der Montage bilden das Dämpfventil und das zugeordnete Rückschlagventil eine Baueinheit.

Die Dämpfventile für beide Bewegungsrichtungen des Verdrängers sind in einem gemeinsamen Gehäuse angeordnet. Diese Maßnahme dient der weiter optimierten Ausnutzung des vorhandenen Bauraums.

Der Bypasskanal weist Vorteilhafterweise eine einzige Ausströmöffnung zu einem angeschlossenen Arbeitsraum auf.

Das Gehäuse ist gemäß einem Unteranspruch über eine Mantelfläche des Zylinders angeschlossen und die Längsachsen der Dämpfventile radial zur Längsachse des Zylinders verlaufen.

Die Herstellbarkeit des Schwingungsdämpfers wird dadurch vereinfacht, dass die Dämpfventile über eine äußere Deckseite des Gehäuses montierbar sind. Man kann die Einströmöffnungen in die Arbeitsräume über die Deckseite des Gehäuses herstellen.

Als zusätzliche Maßnahme zur Anpassung der Dämpfcharakteristik des Schwingungsdämpfers ist mindestens eines der Dämpfventile in seiner Dämpfkraftkennlinie verstellbar.

Gemäß einem vorteilhaften Unteranspruch sind das Gehäuse und der zugehörige Bypasskanal in Umfangsrichtung versetzt mit dem Zylinder verbunden. Der radiale Bauraumbedarf ist dadurch geringer, als wenn das Gehäuse und der Bypasskanal auf einer Linie radial angeordnet wären.

Aus fertigungstechnischen Gründen ist es vorteilhaft, wenn das Gehäuse von einem mit dem Zylinder verbundenen Steg gebildet wird.

In weiterer Ausgestaltung ist das Gehäuse einteilig mit dem Zylinder ausgeführt ist, indem der Zylinder als ein Strangpressprofil ausgeführt ist, das den äußeren Steg umfasst.

Anhand der folgenden Figurenbeschreibung soll die Erfindung näher beschrieben werden.

Es zeigt:
Figur 1 Schwingungsdämpfer im Längsschnitt
Figur 2 Zylinder des Schwingungsdämpfers 1 als Einzelteil im Längsschnitt
Figur 3 Zylinder im Querschnitt
Figur 4 Schnitt durch den Zylinder gemäß Ebene DD
Figur 5 Querschnitt durch den Zylinder gemäß Schnittebene JJ
Figur 6 Querschnitt durch den Zylinder gemäß Ebene KK
Figur 7 Schnittdarstellung durch ein Dämpfventil.

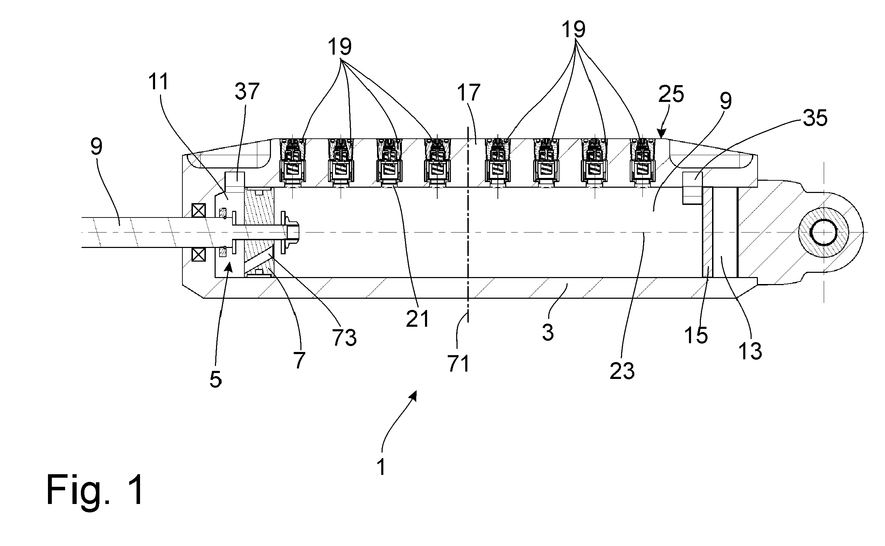

Die Figur 1 zeigt einen Schwingungsdämpfer 1 mit einem Zylinder 3, in dem ein Verdränger 5 eine translatorische Betriebsbewegung ausführt. Der Verdränger umfasst einen Kolben 7 an einer Kolbenstange 9, wobei der Kolben 7 den Zylinder 3 in einen kolbenstangenfernen Arbeitsraum 9 und in einen kolbenstangenseitigen Arbeitsraum 11 unterteilt. Beide Arbeitsräume 9; 11 sind vollständig mit einem Dämpfmedium gefüllt. In diesem Ausführungsbeispiel umfasst der Schwingungsdämpfer 1 einen endseitig angeordneten Ausgleichsraum 13, der das verdrängte Volumen der Kolbenstange 9 kompensiert. Zwischen dem Ausgleichsraum und dem kolbenstangenfernen Arbeitsraum 9 ist ein axial bewegliches, abdichtendes Trennelement 15 oder alternativ eine Membran angeordnet. Einteilig mit dem Zylinder 3 ist ein Gehäuse 17 ausgeführt. In dem Gehäuse 17 sind mehrere Dämpfventile 19 angeordnet, die für eine hubabhängige Dämpfkraftcharakteristik des Schwingungsdämpfers 1 sorgen. Die Dämpfventile 19 sind über Einströmöffnungen 21 mit einem der Arbeitsräume 9; 11 verbunden. Das Gehäuse für die Dämpfventile ist über eine Mantelfläche des Zylinders 3 angeschlossen und die Längsachsen der Dämpfventile 19 verlaufen radial zur Längsachse 23 des Zylinders 3. Die Dämpfventile 19 sind somit über eine äußere Deckseite 25 des Gehäuses 17 montierbar.

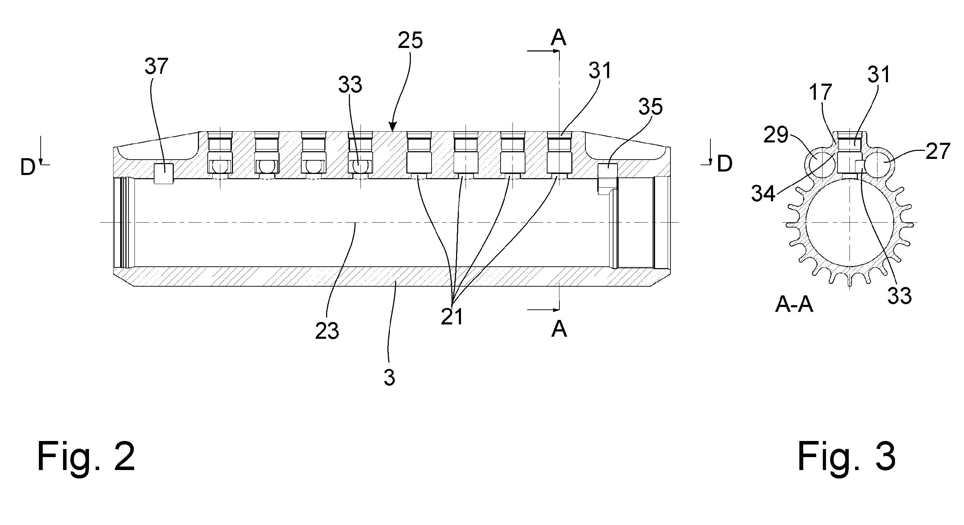

Wie aus der Zusammenschau der Figuren 2 und 3 ersichtlich ist, sind mehrere Dämpfventile in einem gemeinsamen Gehäuse 17 angeordnet. Das Gehäuse 17 verläuft achsparallel zur Längsachse des Zylinders 3. Ebenso verlaufen zwei Bypasskanäle 27, 29 parallel zur Längsachse 23 des Zylinders. Jede Dämpfventilaufnahme 31 ist über eine separate Fluidverbindung 33 mit nur einem der Bypasskanäle 27, 29 verbunden. Die Figur 3 zeigt, dass das Gehäuse 17 und die Bypasskanäle 27, 29 in Umfangsrichtung versetzt mit dem Zylinder 3 verbunden sind. Das Gehäuse 17 wird von einem mit dem Zylinder 3 verbundenen Steg 34 gebildet. Der Zylinder 3 verfügt pro Arbeitsraum und Bypasskanal über mindestens eine Ausströmöffnung 35, 37. Die Einströmöffnungen 21 im Zylinder 3 in Verbindung mit den Dämpfventilen 19, den Fluidverbindungen 33, den Bypasskanälen 27, 29 und den Ausströmöffnungen 35; 37 bilden Strömungsverbindungen zwischen den beiden Arbeitsräumen 9 und 11, wobei die Strömungsverbindungen ersichtlich außerhalb des Verdrängers 5 verlaufen. In diesem Ausführungsbeispiel ist pro Bewegungsrichtung des Verdrängers 5 nur ein einziger Bypasskanal 27, 29 ausgeführt. Prinzipiell kann man auch mehrere Bypasskanäle für eine Bewegungsrichtung vorsehen, wenn z. B. der Bauraum für die Ventilaufnahmen größer ist als der gewünschte Abstand zwischen zwei Stufen der Dämpfkraftkennlinie. Dann kann man zwei Bypasskanäle hydraulisch parallel schalten und eine größere Anzahl von Dämpfventilen auf einer vorgegebenen Hublänge anordnen.

Zum besseren Verständnis der Strömungsverbindung sind die Figuren 4 bis 6 heranzuziehen. Die Figur 4 zeigt einen Höhenschnitt durch den Zylinder 3 im Bereich der Bypasskanäle und des Gehäuses. Es sind acht Dämpfventilaufnahmen 31 erkennbar, von denen vier über Fluidverbindungen 33 mit dem Bypasskanal 27 und vier Dämpfventilaufnahmen über eine Fluidverbindung 33 mit dem Bypasskanal 29 verbunden sind. Der Bypasskanal ist wiederum an die Ausströmöffnung 37 angeschlossen, die in den Arbeitsraum 11 mündet (Figur 1). Der Bypasskanal 29 mündet über die Ausströmöffnung 35 in den kolbenstangenfernen Arbeitsraum 9 (Figur 1).

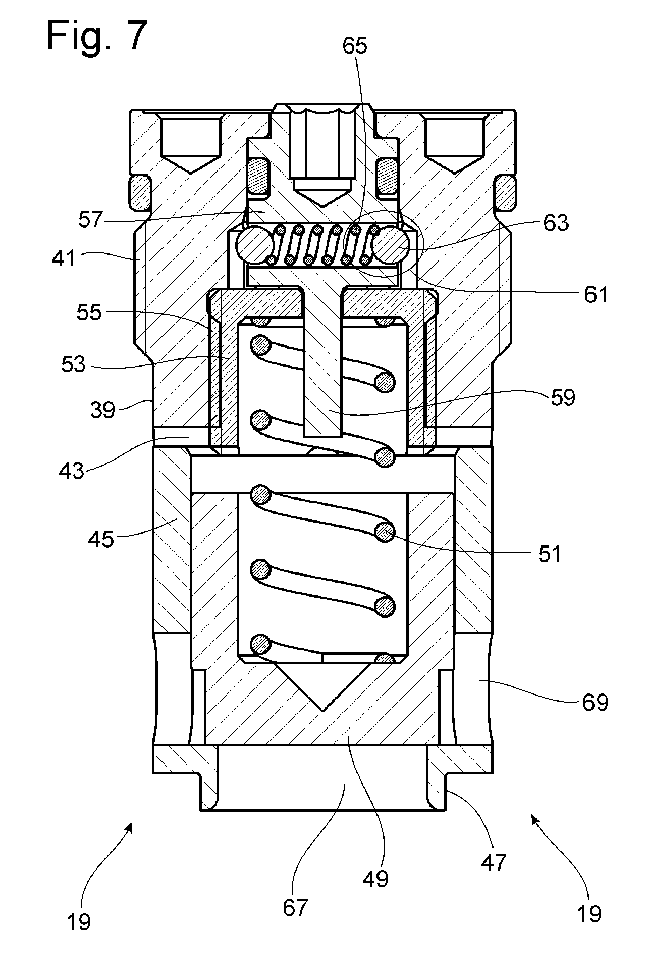

Die Figur 7 zeigt ein Dämpfventil 19 als Einzelteil. Das in seiner Dämpfkraftkennlinie verstellbare Dämpfventil 19 umfasst ein Ventilgehäuseoberteil 39, das auf seiner äußeren Mantelfläche ein Einschraubgewinde 41 zur Fixierung in einer der Dämpfventilaufnahmen 31 aufweist. Über eine formschlüssige Schraubübertragungsverbindung 43 ist das Ventilgehäuseoberteil 39 mit einem Ventilgehäuseunterteil 45 verbunden. Das Ventilgehäuseunterteil 45 umfasst einen Absatz 47, der in eine Einströmöffnung 21 des Zylinders eingeführt wird. In dem Ventilgehäuseunterteil 45 ist ein Ventilkörper 49 gegen eine Ventilfeder 51 axial verschiebbar gelagert. Die Ventilfeder 51 stützt sich im Ventilgehäuseoberteil 39 an einem Federteller 53 ab. Zwischen dem Federteller 53 und einer Innenwandung des Ventilgehäuseoberteils ist ein Bewegungsgewinde 55 ausgeführt. Über einen Drehsteller 57, der zum Ventilgehäuseoberteil 39 verdrehbar ist, kann unter Zwischenschaltung eines Übertragungsbolzens 59 die Drehbewegung des Drehstellers in eine Axialbewegung des Federtellers 53 umgesetzt werden, um die Vorspannung der Ventilfeder 51 einer gewünschten Dämpfkraftkennlinie anzupassen. Rastmittel 61 zwischen dem Drehsteller 57 und dem Ventilgehäuseoberteil 39 in Form von Kugeln 63, die von einer Feder 65 nach radial außen vorgespannt werden, besteht die Möglichkeit einer reproduzierbaren Einstellung der gewünschten Dämpfkraftkennlinie.

Das Dämpfventil gemäß der Figur 7 ist als ein Sitzventil ausgeführt und nur in eine Richtung durchströmbar, nämlich über eine Zulauföffnung 67 im Absatz 47. Eine Durchströmung über eine Fluidanschlussöffnung 69 ist nicht möglich, da der Ventilkörper 49, bedingt durch die Vorspannung der Ventilfeder 51, in die Schließposition übergeführt ist und der Druck in der Fluidverbindung keine Öffnungskraft ausüben kann, so dass der Ventilkörper für diese Anströmrichtung ein Rückschlagventil bildet. Das Dämpfventil 19 bzw. der Ventilkörper 49 in Verbindung mit der Ventilfeder 51 bilden somit ein Dämpfventil wie auch ein zugeordnetes Rückschlagventil als eine Baueinheit.

Bei einer Einfahrbewegung des Verdrängers 5 in Richtung des Arbeitsraums 9 über eine Niveaulage 71, dargestellt durch eine strichpunktierte Querachse, stehen neben einer Ventileinrichtung 73 im Kolben 7 beispielhaft vier Dämpfventile 19 zur Verfügung, die in dieser bestimmten Niveaulage parallel geschaltet sind. Das verdrängte Dämpfmedium kann durch alle vier Dämpfventile über die Fluidverbindungen 33 in den Bypasskanal 27 und weiter über die Ausströmöffnung 37 in den kolbenstangenseitigen Arbeitsraum 11 abfließen. Bis zur Niveaulage 71 weist der Schwingungsdämpfer damit die geringstmögliche Dämpfkraft, bezogen auf eine vorgegebene Kolbenstangengeschwindigkeit, auf. Zwar kann Dämpfmedium aus dem kolbenstangenfernen Arbeitsraum 9 und die Ausströmöffnung 35 in den Bypasskanal 29 fließen, doch verhindern die Rückschlagventilfunktionen der Dämpfventile, die an den Bypasskanal 29 angeschlossen sind, einen Kurzschluss der Dämpfventile 19. Mit zunehmender Einfahrposition verringert sich die Anzahl der eine Durchlassstellung einnehmbaren Ventile, die sich zwischen der Unterseite des Kolbens 7 und der Ausströmöffnung 35 befinden, so dass mit zunehmender Einfahrbewegung immer weniger Dämpfventile 19 zur Verfügung stehen und folglich die Dämpfkraft bei konstantem verdrängtem Volumen ansteigen muss. Der Ausgleichsraum 13 nimmt dabei das Volumen des von der Kolbenstange verdrängten Dämpfmediums auf. Bei einer Ausfahrbewegung der Kolbenstange 9 über die Niveaulage 71 hinaus, wirken die Dämpfventile 19 links von der eingezeichneten Niveaulage 71. Ein Kurzschluss über die Ausströmöffnung 37 ist ebenso unmöglich, da das Dämpfmedium zwar über den Bypasskanal 27 und die Fluidverbindung 33 an den rechten vier Dämpfventilen 19 ansteht, doch die Rückschlagventilfunktion in Richtung der Dämpfventile, ausgehend von den Fluidverbindungen, verhindert ein einfaches Umströmen der Dämpfventile 19, links eingezeichnet von der Niveaulage 71.

Durch die Zusammenfassung aller Dämpfventile 19 in einem einzigen Gehäuse und der Kombination aller Dämpfventile 19 für eine Bewegungsrichtung an einen einzigen Bypasskanal, kann ein sehr kompakter Schwingungsdämpfer erreicht werden.

## Patentansprüche

1. Schwingungsdämpfer (1), umfassend einen Zylinder (3), in dem ein Verdränger (5) eine translatorische Betriebsbewegung ausführt, wobei der Verdränger (5) einen Arbeitskolben (7) umfasst, der den Zylinder (3) in zwei Arbeitsräume (9; 11) unterteilt, wobei die Arbeitsräume (9; 11) außerhalb des Verdrängers (5) für jede Betriebsbewegungsrichtung des Verdrängers (5) durch eine Strömungsverbindung mit Dämpfventilen (19) verbunden sind, wobei jede Strömungsverbindung durch eine Rückschlagventilanordnung nur eine Strömungsrichtung aufweist, wobei die Strömungsverbindung ausgehend vom den Arbeitsräumen (9; 11) mehrere in axialer Richtung versetzt liegende Einströmöffnungen (21) aufweist,
**dadurch gekennzeichnet,**
**dass** die Strömungsverbindung von einem Bypasskanal (27; 29) gebildet wird und an den Bypasskanal (27; 29) mehrere Dämpfventile (19) angeschlossen sind, die über die Einströmöffnungen (27; 29) beaufschlagt werden.

2. Schwingungsdämpfer nach Anspruch 1,
**dadurch gekennzeichnet,**
**dass** pro Bewegungsrichtung des Verdrängers (5) ein einziger Bypasskanal (27; 29) vorliegt.

3. Schwingungsdämpfer nach Anspruch 1,
**dadurch gekennzeichnet,**
**dass** mehrere Dämpfventile (19) in einem gemeinsamen Gehäuse (17) angeordnet sind, wobei das Gehäuse (17) in Fluidverbindung mit dem Bypasskanal (27; 29) steht.

4. Schwingungsdämpfer nach Anspruch 3,
**dadurch gekennzeichnet,**
**dass** in der Fluidverbindung (33) für jedes Dämpfventil (19) in Strömungsrichtung zum Dämpfventil (19) ein sich schließendes Rückschlagventil angeordnet ist.

5. Schwingungsdämpfer nach Anspruch 4,
**dadurch gekennzeichnet,**
**dass** das Dämpfventil (19) und das zugeordnete Rückschlagventil eine Baueinheit bilden.

6. Schwingungsdämpfer nach Anspruch 3,
**dadurch gekennzeichnet,**
**dass** die Dämpfventile (19) für beide Bewegungsrichtungen des Verdrängers (5) in einem gemeinsamen Gehäuse (17) angeordnet sind.

7. Schwingungsdämpfer nach Anspruch 1,
**dadurch gekennzeichnet,**
**dass** der Bypasskanal (27; 29) eine einzige Ausströmöffnung (35; 37) zu einem angeschlossenen Arbeitsraum (9; 11)aufweist.

8. Schwingungsdämpfer nach Anspruch 3,
**dadurch gekennzeichnet,**
**dass** das Gehäuse (17) über eine Mantelfläche des Zylinders (3) angeschlossen ist und die Längsachsen der Dämpfventile (19) radial zur Längsachse (23) des Zylinders (3) verlaufen.

9. Schwingungsdämpfer nach Anspruch 8
**dadurch gekennzeichnet,**
**dass** die Dämpfventile (19) über eine äußere Deckseite (25) des Gehäuses (17) montierbar sind.

10. Schwingungsdämpfer nach Anspruch 1,
**dadurch gekennzeichnet,**
**dass** mindestens eines der Dämpfventile (19) in seiner Dämpfkraftkennlinie verstellbar ist.

11. Schwingungsdämpfer nach Anspruch 3,
**dadurch gekennzeichnet,**
**dass** das Gehäuse (17) und der zugehörige Bypasskanal (27); 29) in Umfangsrichtung versetzt mit dem Zylinder (3) verbunden sind.

12. Schwingungsdämpfer nach Anspruch 8,
**dadurch gekennzeichnet,**
**dass** das Gehäuse (17) von einem mit dem Zylinder (3) verbundenen Steg (34) gebildet wird.

13. Schwingungsdämpfer nach Anspruch 3,
**dadurch gekennzeichnet,**
**dass** das Gehäuse (17) einteilig mit dem Zylinder (3) ausgeführt ist.
